(19) Europäisches Patentamt
European Patent Office
Office européen des brevets

(11) Publication number: **0 111 342**
**B1**

(12) **EUROPEAN PATENT SPECIFICATION**

(45) Date of publication of patent specification: **06.07.88**

(51) Int. Cl.$^4$: **C 08 F 214/26**

(21) Application number: **83112525.7**

(22) Date of filing: **13.12.83**

(54) **Non-melt-fabricable granular modified terafluoroethylene polymer.**

(30) Priority: **13.12.82 US 449499**

(43) Date of publication of application:
**20.06.84 Bulletin 84/25**

(45) Publication of the grant of the patent:
**06.07.88 Bulletin 88/27**

(84) Designated Contracting States:
**DE FR GB IT NL**

(56) References cited:
**EP-A-0 043 948**
**GB-A-2 084 593**
**US-A-3 804 817**
**US-A-4 123 602**

**CHEMICAL ABSTRACTS, vol. 92, no. 12, 24th March 1980, page 14, no. 94880m, Columbus, Ohio, US**

(73) Proprietor: **E.I. DU PONT DE NEMOURS AND COMPANY**
**1007 Market Street**
**Wilmington Delaware 19898 (US)**

(72) Inventor: **Malhotra, Satish Chandra**
**210 N. Hills Drive**
**Parkersburg West Virginia 26101 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

**EP 0 111 342 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of the invention

This invention relates to improved granular polytetrafluoroethylene compositions which contain a small amount of at least one selected fluoroalkyl ethylene copolymerized therewith, and to processes for preparing such compositions.

Background of the invention

Granular polytetrafluoroethylene molding resins are employed in molding and ram extrusion processes to produce billets and other plastic articles. Granular polytetrafluoroethylene is prepared by polymerizing tetrafluoroethylene by a process in which little or no dispersing agent is employed and agitation is carried out vigorously in order to produce a precipitated resin. This resin is commonly referred to as "granular" resin. The procedure is called "suspension polymerization". When the term "granular" is used herein, it is used to denote the resin formed by the suspension polymerization procedure.

There is another polytetrafluoroethylene material that is referred to by those skilled in art as "fine powder polytetrafluoroethylene". To make this so-called "fine powder", a process called "aqueous dispersion polymerization" is used. In this process sufficient dispersing agent is employed and agitation is mild in order to produce small colloidal size particles dispersed in the aqueous reaction medium. In this aqueous dispersion polymerization, precipitation (i.e., coagulation) of the resin particles is avoided during polymerization. The dispersion may be used as such, or the dispersed particles may be coagulated in a separate step and the resulting "fine powder" obtained.

The two polymerization procedures produce distinctly different products. The granular product can be molded in various forms, whereas the fine powder produced by the aqueous dispersion method cannot be molded but must be fabricated by dispersion coating or by adding a lubricant for paste extrusion. In contrast, granular resin is incapable of being paste extruded.

Tetrafluoroethylene polymers produced by the aqueous dispersion polymerization method are generally not suited to ram extrusion processing, since they have a very soft sensitive grain, and, due to their molecular weight being lower compared with granular polymers, give extrudates with low mechanical strength.

Suspension polymerization of tetrafluoroethylene to obtain granular product is generally carried out by filling the polymerization reactor, which is equipped with an agitating system, with an aqueous medium in which a catalyst forming free radicals, optionally a buffer, and optionally a small amount of a fluorinated emulsifier is present. The air is removed and tetrafluoroethylene is fed into the reactor. After polymerization has started, gaseous tetrafluoroethylene is fed at a rate corresponding to the polymer amount being formed, while keeping the polymerization pressure constant.

It has previously been known that if a small amount of comonomer is present, the properties of the resulting modified granular polytetrafluoroethylene particles can be altered. For example, sinterability can be improved and crystallinity reduced. Two comonomers preferred by the art are hexafluoropropylene, $CF_3$—CF=$CF_2$, and perfluoro(propyl vinyl ether), $CF_3CF_2CF_2$—O—CF=$CF_2$. This is evident from GB—A—1 116 210 and US—A—3 855 191. However, using perfluoro(propyl vinyl ether), the melt viscosity of the resulting granular copolymer is relatively low, and large billets molded therefrom have a tendency to deform (sag) under their own weight during sintering. It would be desirable to find a comonomer which can be used to make a granular copolymer having a higher melt viscosity.

Copolymers of from 93 to 99 mol % of tetrafluoroethylene units and of from 7 to 1 mol % of fluorinated alkylethylene comonomer units are known from GB—A—2 084 593. These copolymers, however, likewise have a relatively low melt viscosity or relatively low melting points, so that they are not suited either for the production of large molded billets.

Use of hexafluoropropylene is not completely satisfactory either. Presence of this comonomer causes the resulting copolymer to be less thermally stable than tetrafluoroethylene homopolymer. Evidence of such instability is shown at column 1, lines 29—30 of US—A—3 855 391. It would be desirable to find a comonomer which would not deleteriously affect the thermal stability of the copolymer significantly.

Summary of the invention

This invention is a non-melt-fabricable granular modified tetrafluoroethylene polymer having a melt viscosity of no less than about $1\times10^8$ Pa · s at 380°C and containing polymerized units of at least one copolymerizable monomer of the formula

$$R_f\text{—}CH=CH_2$$

present in an amount of less than 0.5% by weight based on the weight of the polymer, wherein $R_f$ is a fluorinated alkyl radical of 2—10 carbon atoms which is either perfluorinated or which is perfluorinated except for the presence of one substituent attached to a carbon atom of the $R_f$ radical which substituent is selected from hydrogen or halogen other than fluorine.

Description

The polymers of this invention are of high molecular weight as indicated by their inability to be

fabricated by melt flow procedures such as melt extrusion or injection molding. Thus they are "non-melt-fabricable", i.e. are not extrudable from a melt. They are made by the suspension tetrafluoroethylene polymerization process and thus are the so-called "granular" tetrafluoroethylene polymers. In view of their non-melt-fabricable nature, the copolymers generally have melt viscosities above $1\times10^8$ Pa · s measured at 380°C. These high melt viscosities are obtained by keeping the amount of comonomer low. The amount of polymerized comonomer units present complementally to the tetrafluoroethylene units is less than 0.5 percent by weight of total polymer weight and preferably less than 0.2%. As a minimum amount present, preferably at least 0.01% of the comonomer will be present in copolymerized form. The comonomers have the formula $R_f$—CH=CH$_2$. $R_f$ can be perfluorinated, $(F(CF_2)_{\overline{n}}$, wherein n is an integer of 2—10 carbon atoms, or $R_f$ can be perfluorinated except for one substituent which replaces a fluorine atom, which substituent is H or other halogen, (Cl, Br or I), preferably Cl or Br.

Examples of comonomers that can be used to make the polymers of this invention include

$CF_3$—$CF_2$—CH=$CH_2$; $CF_3(CF_2)_9CH=CH_2$;
$CF_2H$—$CF_2$—CH=$CH_2$; $CF_2H(CF_2)_9CH=CH_2$;
$CF_2Br$—$CF_2$—CH=$CH_2$; $CF_2Br(CF_2)_9CH=CH_2$;
$CF_3$—CFH—$CF_2$—CH=$CH_2$,

and the like. Mixtures of comonomers may be used. Perfluorobutyl ethylene, $CF_3$—$(CF_2)_3CH=CH_2$ is preferred.

The process used to prepare the polymers of this invention is the usual suspension polymerization process used to prepare granular polytetrafluoroethylene. Such polymerization is described in a number of patents such as US—A—3 245 972 and US—A—3 855 191. In brief, tetrafluoroethylene is pressured into an autoclave containing water and conventional free-radical polymerization initiators along with optionally buffer and optionally a small amount (up to about 200 ppm based on $H_2O$) of an emulsifying agent. The reaction mixture is agitated and the polymerization is carried out at suitable temperatures and pressures. Upon completion of the polymerization, the polymer is isolated and dried. The comonomers may be added as a precharge, but since the comonomers react much faster than tetrafluoroethylene momomer, it is preferred to add comonomer throughout the course of the polymerization in order to obtain a polymer that contains comonomer units distributed relatively evenly throughout the polymer chain in the small amounts present. Thus, comonomer is preferably both precharged to the polymerization vessel and added subsequently during polymerization, either in increments or continuously. It is important not to add too much comonomer at any one time since it may react with itself if too much is present.

The polymerization temperature will ordinarily be between 50—120°C and the initiator will be a peroxide or persulfate. Inorganic persulfates, such as ammonium persulfate, are preferred. A buffer to maintain pH at between 6—9 may be used if desired. In addition, a small amount of a dispersing agent (e.g. up to 100 or 200 ppm based on water present) may be employed in order to increase the surface area of the resulting polymer particles. Agitation will be sufficient to ensure coagulation of the polymer particles as the polymerization proceeds.

The polymers of this invention have high melt viscosities and are suitable for preparing billets. (Billets are useful to skive into tapes or sheets). The polymers also exhibit high dielectric strength which makes them useful for electrical grade skived tape; low deformation under load which makes them useful for gaskets; high flexural strength which makes them useful for bellows and membranes; and low gas permeability which makes them useful for chemical lining and diaphragms.

A distinction must be made between the granular (suspension made) polymers of this invention and tetrafluoroethylene copolymers having a higher content of comonomer. The latter contains enough comonomer to permit them to be processed from a melt by extrusion methods customary for thermoplastics. The granular suspension-made polymers of this invention, like unmodified polytetrafluoroethylene itself, belong to the type of tetrafluoroethylene polymers that are not extrudable from the melt, and special molding methods must be used to fabricate them.

Furthermore, being suspension-made, the polymers of this invention have a morphology which differs from that of dispersion-prepared fine powder polymers. These latter polymers are produced in the presence of such high amounts of emulsifier that, after polymerization has ended, they remain in colloidal distribution in the aqueous medium. These fine powder polymers are obtained from the colloidal dispersion by coagulation and on coagulation form agglomerates from colloidal primary particles that have an average particle diameter of about 0.1 to 0.5 µm. As is known to one skilled in the art, they can not be molded by ram extrusion or mold-sinter processing techniques, even if they contain comonomer modifiers.

Properties of the polymers obtained in the Examples which follow are obtained according to the procedures set forth below:

1) Determination of comonomer content

Comonomer content in the copolymers was determined by Fourier Transform (FT) IR spectroscopy. Ten mil (0.0254 cm) cold pressed films were prepared and spectra were obtained on Nicolet 7000 FT IR spectrophotometer at a resolution of 4 $cm^{-1}$. The —$CH_2$— bending vibration at 880 $cm^{-1}$ was used, calibrated using NMR analysis. The absorbance at 880 $cm^{-1}$ was calculated by taking the difference

between absorbances at 888 and 880 $cm^{-1}$. For perfluorobutyl ethylene (PFBE) comonomer, the calculation used is as follows

$$\text{Wt. \% PFBE}=\frac{A\ 880\ cm^{-1}-(0.00064\times t)\times 100}{t\times 0.97}$$

where t=Thickness in mils (1 mil=$2.54\times10^{-3}$ cm) and A=absorbance.

2) Standard specific gravity (SSG)

Standard specific gravity (SSG) of the molding powder is measured by water displacement of a standard molded test specimen in accordance with ASTM D1457—69. The standard molded part is formed by preforming 12.0 g of the molding powder in a 2.86 cm. diameter die at a pressure of 34.48 and 6.90 MPa (352 and 70.4 kg/$cm^2$), followed by the sintering cycle of the preform of heating from 300° to 380°C at 2°C/min, holding at 380°C for 30 minutes, cooling to 295°C at 1°C/min and holding at this temperature for 25 minutes, after which the specimen is cooled to room temperature and tested for specific gravity.

3) Specific surface area (SSA)

SSA was measured by a "Quantasorb" surface area analyzer. The measurement was made on raw polymer obtained directly from the polykettle vessel after washing and drying..

4) Melt viscosity

Melt viscosity is calculated by measuring the tensile creep of a sintered piece held at 380°C Specifically, 12 g of molding powder is placed in a 7.6 cm diameter mold between 0.152 cm rubber cauls and paper spacers. Pressure is then slowly applied on the mold until a value of 40.5 kg/$cm^2$ is obtained. This pressure is held for 5 minutes and then released slowly. After the sample disc is removed from the mold and separated from the cauls and paper spacers, it is sintered at 380°C for 30 minutes. The oven is then cooled to 290°C at a rate of about 1°C a minute and the sample is removed. A crack-free rectangular sliver with the following dimensions is cut: 0.152 to 0.165 cm wide, 0.152 to 0.165 cm thick, and at least 6 cm long. The dimensions are measured accurately and the cross-sectional area is calculated. The sample sliver is attached at each end to quartz rods by wrapping with silver-coated copper wire. The distance between wrappings is 4.0 cm. This quartz rod-sample assembly is placed in a columnar oven where the 4 cm test length is brought to a temperature of 380°±2°C A weight is then attached to the bottom quartz rod to give a total weight suspended from the sample sliver of about 17 g. The elongation measurements vs. time are obtained, and the best average value for the creep curve in the interval between 100 and 130 minutes is measured. The apparent melt viscosity is then calculated from the relationship

$$\eta app=(WL_t g)/3(dL_t/dt)A_T$$

wherein

$\eta app$=(apparent) melt viscosity in shear, poises
W=tensile load on sample, g
$L_t$=length of sample (at 380°C) cm (4.32 cm)
g=gravitational constant, 980 cm/$s^2$
$(dL_t/dt)$=rate of elongation of sample under load=slope of elongation vs. time plot, cm/s
$A_T$=cross-sectional area of sample (at 380°C), $cm^2$—area increases 37% at 380°C over that at room temperature

5) Dielectric strength

Dielectric strength was measured by preforming 140 g powder into a 5.6 cm diameter molding and sintering at 380°C for 3 1/2 hours, heating at 6°C/min from 290° to 380°C and cooling at 1°C/min from 380°C to 290°C. The measurement was made on 5-ml tape using Beckman Model PA5 AC Dielectric Strength Test Set.

6) TGA

TGA was obtained using a Du Pont 951 TGA Analyzer. The weight loss was determined at a constant temperature for 2 and 4 hr. (negative weight loss actually indicates wt. again.)

7) Tensile strength and elongation

Tensile strength and elongation were measured in accordance with ASTM D-1457-69.

Examples

Example 1

A 38-liter polykettle vessel was charged with 21.8 kg of demineralized water, 0.30 g (13.8 ppm) ammonium perfluorooctanoate (APFC) dispersant, and 3.0 g ammonium persulfate (APS) initiator. The contents of the vessel were heated to 65°C and evacuated. The vessel was agitated with a 2-blade 45° pitch

agitator at 600 RPM. One ml perfluorobutylethylene (PFBE) was injected into the vessel with a syringe. Tetrafluoroethylene (TFE) was then added to the vessel until the pressure was $1.72\times10^6$ Pa. After the polymerization began, as evidenced by a drop in pressure, TFE was added to maintain the pressure at $1.72\times10^6$ Pa and an additional 8 ml PFBE was continuously added with a microfeeder at the rate of 0.1 ml per min. After the desired amount of TFE had been added, the feed was stopped and the mixture was allowed to react down to $5.5\times10^4$ Pa pressure. Reaction time was 95 minutes. 8.2 kg TFE was polymerized. After venting and evacuation, the pressure in the vessel was brought back to atmospheric with nitrogen and the contents cooled to below 50°C. The polymer was discharged from the vessel and the adhesions were separated. The polymer was cut to less than 0.03 mm average particle size.

The polymer properties are given in Table 1.

Examples 2—5

Example 1 was repeated with the following ingredient amounts. The polymer properties are given in Table 1.

| | Ex. 2 | Ex. 3 | Ex. 4 | Ex. 5 |
|---|---|---|---|---|
| APFC, g | 0.30 | 0.30 | 0.30 | 0.10 |
| APS, g | 0.75 | 3.0 | 2.0 | 1.0 |
| PFBE Precharge, ml | 0 | 0.5 | 1.0 | 1.0 |
| PFBE Microfed, ml | 5.1 | 4.2 | 8.0 | 1.0 |
| Microfeeder Rate, ml/min | 0.1 | 0.06 | 0.1 | 0.02 |
| TFE Reacted, kg | 6.0 | 8.2 | 6.2 | 8.2 |
| Reaction Time, min | 122 | 69 | 123 | 85 |

TABLE 1
Physical properties of polymers

| | Ex. 1 | Ex. 2 | Ex. 3 | Ex. 4 | Ex. 5 |
|---|---|---|---|---|---|
| % PFBE by Wt. | 0.12 | 0.10 | 0.01 | 0.24 | 0.01 |
| SSG measured at 34.48 M Pa | 2.174 | 2.165 | 2.175 | 2.163 | 2.162 |
| SSG measured at 6.90 M Pa | — | 2.161 | 2.175 | 2.162 | 2.159 |
| SSA, $m^2/g$ (Raw Polymer) | — | — | — | 4.5 | 3.5 |
| Melting Point, °C | 345 | 347 | 345 | 343 | 346 |
| Melt Viscosity, PaS* | $0.6\times10^9$ | $0.6\times10^9$ | $1.0\times10^9$ | $1.6\times10^9$ | $4.0\times10^9$ |
| Dielectric Strength v/mil (Preform Press, M Pa) | 1755 (34.48) | 1570 (34.48) | — | 1789 (13.8) | 1860 (13.8) |
| TGA (% Wt Loss at 377°C) | −0.5/2 hr | — | — | — | 0/4 hr |
| Tensile Strength (measured at 6.90 MPa, MPa preform pressure) | — | 32.9 | — | — | — |
| Elongation, % | — | 449 | — | — | — |
| Ram Extrusion of 6 mm Rod at 6 m/hr: Tensile Strength, M Pa | | — | 19.3 | — | — |
| Elongation, % | — | — | 298 | — | — |

Comparison A

Properties of the copolymer of Example 1 were compared with a copolymer made of tetrafluoroethylene and perfluoro(propyl vinyl ether) (PPVE). This comparison copolymer was prepared according to the procedure used to prepare the copolymer of Example 1. The ingredients and other relevant process data were as follows:

| | |
|---|---|
| APFC, g | 0.3 |
| APS, g | 0.65 |
| PPVE, Precharge, Ml | 0.5 |
| PPVE, Microfed, Ml | 10 |
| Microfeeder Rate, ml/min | 0.1 |
| TFE reacted, kg | 7.7 |
| Reaction Time, min | 140 |

Property data of this PPVE Modified tetrafluoroethylene copolymer is compared with that of the Example 1 copolymer as follows:

TABLE 2

| | Example 1 | Comparative Example |
|---|---|---|
| % Comonomer by Wt. | 0.12 PFBE | 0.08 PPVE |
| SSG at preform pressure 34.48 M Pa | 2.174 | 2.173 |
| Melting Point, °C | 345 | 347 |
| Melt Viscosity PaS | $0.6\times10^9$ | $1.1\times10^8$ |
| Dielectric Strength, v/mil (Preform Press, M Pa) | 1755 (34.48) | 1700 (34.48) |
| TGA (% Wt loss at 377°C) | −0.5/2 hr (wt. gain) | 0/2 hr |

It is seen from this data that melt viscosity of the PPVE-modified polymer (comparative example) is lower than that for the PFBE-modified resin of Example 1, even though SSG is virtually the same. A high melt viscosity for the molding resins is desired for heavy billets to retain shape at sintering temperatures.

Comparison B

A copolymer was prepared by reacting tetrafluoroethylene and hexafluoropropylene (HFP) following the procedure of Example 1, except that APS used was 0.70 g, APFC used was 0.30 g, HFP was precharged *only* (=13 g); temp=60°C. The amount of copolymerized HFP in the copolymer was 0.07% by weight. The HFP modified copolymer was compared with the copolymer of Example 2 for thermal stability, with the following results:

| | PFBE-Modified copolymer | HFP-Modified copolymer |
|---|---|---|
| Thermal Instability Index (TII)—ASTM Method D-1457 | 4 | 25 |
| % Wt. Loss in $N_2$ at 370°C/3 hr | 0.0059 | 0.0084 |

Low TII means better stability. Thus, it is seen that the PFBE-modified copolymer of this invention is more thermally stable.

Comparison C

160 g plaque moldings of 5.6 cm diameter of the polymers of Example 1 and a sample like Comparison A (PPVE), but different in that it was prepared on manufacturing scale with modified recipe, with PPVE precharged only (mv=$1.6\times10^8$ Pa S), were sintered at 380°C for 5 hours in air with a 4.8 kg weight that covered the plaque on top of each of the moldings. The sintered moldings had the following dimensions:

| | Example 1 | Sample like Comparison A |
|---|---|---|
| Avg. Thickness, cm | 3.1 | 2.7 |
| Top Diameter, cm | 5.5 | 5.8 |
| Bottom Diameter, cm | 5.6 | 5.7 |

The molding of Example 1 was normal in appearance while the molding of the comparison was significantly distorted. The thickness of the comparison (2.7 cm) is smaller than that before sintering (2.85 cm) in spite of the growth normally experienced during sintering. The diameter (5.7—5.8 cm) is generally larger than that before sintering (5.7 cm) in spite of the shrinkage normally experienced during sintering.

**Claims**

1. A non-melt-fabricable granular modified tetrafluoroethylene polymer having a melt viscosity of no less than about $1\times10^8$ Pa · s at 380°C and containing polymerized units of at least one copolymerizable monomer of the formula

$$R_f\text{—}CH{=}CH_2$$

present in an amount of less than 0.5% by weight based on the weight of the polymer, wherein $R_f$ is a fluorinated alkyl radical of 2—10 carbon atoms which is either perfluorinated or which is perfluorinated except for the presence of one substituent attached to a carbon atom of the $R_f$ radical which substituent is selected from hydrogen or halogen other than fluorine.

2. The polymer of Claim 1 wherein the copolymerizable monomer of the formula $R_f\text{—}CH{=}CH_2$ is one in which $R_f$ is perfluorinated.

3. The polymer of Claim 1 wherein the copolymerizable monomer of the formula $R_f\text{—}CH{=}CH_2$ is perfluorobutyl ethylene.

4. Use of a polymer according to Claims 1, 2 or 3 in the form of a molding resin or in the form of a molded article.

5. Process for polymerizing tetrafluoroethylene and at least one comonomer to make a non-melt-fabricable granular modified polytetrafluoroethylene polymer having a melt viscosity of no less than about $1\times10^8$ Pa · s at 380°C by carrying out the suspension polymerization of tetrafluoroethylene and at least one said comonomer, comprising (1) employing as the comonomer a monomer of the formula

$$R_f\text{—}CH{=}CH_2$$

wherein $R_f$ is a fluorinated alkyl radical of 2—10 carbon atoms which is either perfluorinated or which is perfluorinated except for the presence of one substituent attached to a carbon atom of the $R_f$ radical which substituent is selected from hydrogen or halogen other than fluorine, and (2) adding said comonomer during the course of the polymerization in such an amount that the comonomer is present in an amount of less than 0.5% by weight based on the weight of the polymer.

6. Process for shaping a molding resin in which the resin is made of a polymer defined in Claim 1, which comprises ram extruding said resin.

**Patentansprüche**

1. In der Schmelze nicht verarbeitbares körniges modifiziertes Tetrafluorethylenpolymeres, das eine Schmelzviskosität von nicht weniger als etwa $1\times10^8$ Pa · s bei 380°C hat und polymerisierte Einheiten von wenigstens einem copolymerisierbaren Monomeren der Formel

$$R_f\text{—}CH{=}CH_2$$

enthält, welches in einer Menge von weniger als 0,5 Gew.-%, bezogen auf das Gewicht des Polymeren, anwesend ist, wobei $R_f$ ein fluorierter Alkylrest mit 2 bis 10 Kohlenstoffatomen bedeutet, welcher entweder perfluoriert ist oder perfluoriert ist mit Ausnahme der Anwesenheit eines, an einem Kohlenstoffatom des $R_f$-Restes hängenden Substituenten, der ausgewählt ist unter Wasserstoff oder von Fluor verschiedenem Halogen.

2. Polymeres nach Anspruch 1, bei dem das copolymerisierbare Monomere der Formel $R_f\text{—}CH{=}CH_2$ ein solches ist, bei dem $R_f$ perfluoriert ist.

3. Polymeres nach Anspruch 1, bei dem das copolymerisierbare Monomere der Formel $R_f\text{—}CH{=}CH_2$ Perfluorbutylethylen ist.

4. Verwendung eines Polymeren nach den Ansprüchen 1, 2 oder 3 in Gestalt eines Formharzes oder in Gestalt eines geformten Gegenstandes.

5. Verfahren zum Polymerisieren von Tetrafluorethylen und mindestens einem Comonomeren zur Herstellung eines in der Schmelze nicht verarbeitbaren körnigen modifizierten Polytetrafluorethylenpolymeren mit einer Schmelzviskosität von nicht weniger als etwa $1\times10^8$ Pa · s bei 380°C unter Durchführung der Suspensionspolymerisation von Tetrafluorethylen und dem genannten wenigstens einen Comonomeren, umfassend (1) die Verwendung eines Monomeren der Formel

$$R_f\text{—}CH{=}CH_2$$

als Comonomerem, in welcher $R_f$ ein fluorierter Alkylrest mit 2 bis 10 Kohlenstoffatomen ist, der entweder perfluoriert ist oder der perfluoriert ist mit Ausnahme der Anwesenheit eines, an einem Kohlenstoffatom des $R_f$-Restes hängenden Substituenten, der ausgewählt ist unter Wasserstoff und von Fluor verschiedenem Halogen, und (2) das Hinzufügen des genannten Comonomeren während des Ablaufs der Polymerisation in einer solchen Menge, daß das Comonomere in einer Menge von weniger als 0,5 Gew.-%, bezogen auf das Gewicht des Polymeren, anwesend ist.

6. Verfahren zur Formgebung eines Formharzes, bei dem das Harz aus einem Polymeren nach Anspruch 1 hergestellt worden ist, und welches die Kolbenextrusion des genannten Harzes umfaßt.

**Revendications**

1. Un polymère de tétrafluoréthylène modifié, granulaire, non façonnable à l'état fondu, présentant une viscosité à l'état fondu non inférieure à environ $1 \times 10^8$ Pa · s à 380°C et contenant des motifs polymérisés d'au moins un monomère copolymérisable de la formule

$$R_f\text{—}CH=CH_2$$

présent en une proportion de moins de 0,5% en poids par rapport au poids du polymère, où $R_f$ est un radical alkyle fluoré de 2 à 10 atomes de carbone qui est soit perfluoré, soir perfluoré à l'exception de la présence d'un substituant fixé à un atome de carbone du radical $R_f$, ce substituant étant choisi parmi l'hydrogène et les halogènes autres que le fluor.

2. Le polymère selon la revendication 1 dans lequel le monomère copolymérisable de formule $R_f$—$CH_2$ est un radical dans lequel $R_f$ est perfluoré.

3. Le polymère selon la revendication A dans lequel le monomère copolymérisable de formule $R_f$—$CH=CH_2$ est le perfluorobutyl éthylène.

4. Utilisation d'un polymère selon les revendications 1, 2 ou 3 sous la forme d'une résine de moulage ou sous la forme d'un objet moulé.

5. Procédé pour la polymérisation du tétrafluoréthylène et d'au moins un comonomère pour préparer un polymère polytétrafluoréthylène modifié, granulaire, non façonnable à l'état fondu, présentant une viscosité à l'état fondu non inférieure à environ $1 \times 10^8$ Pa · s à 380°C en opérant la polymérisation en suspension du tétrafluoréthylène et du ou desdits comonomères, comprenant (1) l'utilisation comme comonomère d'un monomère de la formule

$$R_f\text{—}CH=CH_2$$

dans lequel $R_f$ est un radical alkyle fluoré de 2 à 10 atomes de carbone qui est soit perfluoré, soit perfluoré à l'exception de la présence d'un substituant fixé à un atome de carbone du radical $R_f$, ce substituant étant choisi parmi l'hydrogène et les halogènes autres que le fluor, et (2) l'addition dudit comonomère pendant le déroulement de la polymérisation en une proportion telle que le comonomère soit présent en une proportion de moins de 0,5% en poids par rapport au poids du polymère.

6. Procédé pour le façonnage d'une résine de moulage dans lequel la résine est faite d'un polymère selon la revendication 1, qui comprend l'extrusion à la presse de ladite résine.